# FASCICULE DE BREVET EUROPEEN

(11) **EP 3 066 392 B1**
(45) Date de publication et mention de la délivrance du brevet: **19.06.2019**
(21) Numéro de dépôt: 14802935.8
(22) Date de dépôt: 04.11.2014
(51) Int. Cl.: A23L 35/00, F24C 7/08, A23L 5/10

(54) **PROCÉDÉ DE DECONGELATION, RECHAUFFAGE ET/OU CUISSON D'UN PRODUIT ALIMENTAIRE**
VERFAHREN ZUM AUFTAUEN, AUFWÄRMEN UND/ODER GAREN VON NAHRUNGSMITTELN
METHOD OF THAWING, REHEATING AND/OR COOKING A FOOD PRODUCT

(30) Priorité: 04.11.2013 FR 1360770
(43) Date de publication de la demande: 14.09.2016
(73) Titulaire: BOUTELOUP, Claude, F-71220 Sivignon (FR)
(72) Inventeur: HENRY, René, 71220 Sivignon (FR); BOUTELOUP, Claude, 71220 Sivignon (FR)
(74) Mandataire: Schmidt, Martin Peter
(86) Numéro de dépôt international: PCT/FR2014/000234
(87) Numéro de publication internationale: WO 2015/063381

(56) Documents cités:
- EP-A1- 2 361 511
- EP-A2- 1 267 129
- US-A- 5 695 668
- US-A1- 2005 173 401
- US-A1- 2009 057 292

## Description

### Domaine technique

L'invention concerne le domaine de la préparation de produits alimentaires. Plus particulièrement, l'invention concerne la décongélation, le réchauffage et/ou la cuisson d'un produit alimentaire, notamment d'un produit alimentaire surgelé de type pizza, à pâte fine ou épaisse, de type sandwich-pizza, tartes, ou tout autre produit à base de pâte alimentaire.

### Etat de la technique

La décongélation, le réchauffage et/ou la cuisson d'un produit alimentaire surgelé peut nécessiter un temps de chauffage relativement long et qui ne peut être adapté à une exploitation commerciale de type restauration rapide.

Typiquement, le temps de décongélation, de réchauffage et/ou de cuisson d'une pizza surgelée compris entre 4 et 5 minutes pour un four de type micro-ondes et entre 8 et 10 minutes pour un four conventionnel (à une température de l'ordre de 250°C, sans compter le temps de préchauffage du four).

Le document FR 2 889 029 décrit un dispositif de décongélation, réchauffage et cuisson d'une pâte alimentaire, comprenant une enceinte dé chauffage pourvue d'une sole chauffante et d'une rampe de tubes émetteurs de rayons chauffants à forte puissance disposés au-dessus de ladite sole. Le rayonnement chauffant est concentré sur la surface supérieure de la pâte alimentaire par une plaque réfléchissante sus-jacente à la rampe de tubes émetteurs et la surface inférieure de la pâte est chauffée à haute température par contact avec la sole chauffante.

Le document FR 2 955 462 décrit un dispositif de décongélation, réchauffage et cuisson d'un produit alimentaire du même type que celui exposé ci-avant, mais comprenant en outre une couche de céramique recouvrant tout ou partie de la surface supérieure des tubes émetteurs de rayons chauffants.

Ces deux dispositifs, bien qu'apportant d'importants avantages par rapport aux fours classiques et aux fours de type micro-ondes, présentent néanmoins certains inconvénients. En particulier, ces dispositifs ne conviennent pas pour la décongélation, le réchauffage et/ou la cuisson de produits alimentaires de grande taille, par exemple pour une pizza surgelée dont le diamètre est compris entre 25 et 32 cm, voire plus. L'intensité du rayonnement fournie par les émetteurs compris dans ces dispositifs ne permet pas d'obtenir un produit complètement décongelé, réchauffé et/ou cuit après 2 minutes d'exposition aux rayonnements infrarouges. En particulier, la partie centrale de la pizza est partiellement décongelée alors que la partie périphérique est réchauffée et/ou cuite. Il faudrait chauffer encore quelques minutes supplémentaires pour pouvoir obtenir un produit parfaitement décongelé, réchauffé ou cuit, ce qui n'est pas souhaitable car d'une part, le temps de chauffage supplémentaire a tendance à griller les contours du produit alimentaire et d'autre part, ce temps supplémentaire peut entraîner à terme une diminution de la rentabilité globale d'un service de restauration rapide proposant de tels produits alimentaires.

Les documents US 5695668 A et US 2009/057292 A1 sont également pertinents par rapport à l'objet de l'invention.

La présente invention a pour objectif de pallier les inconvénients de l'art antérieur.

### Objet de l'invention

L'invention vise à remédier à ces inconvénients et propose un nouveau procédé conforme pour décongeler, réchauffer et/ou cuire un produit alimentaire, notamment d'une pâte alimentaire surgelée, dans un dispositif comprenant au moins une enceinte de chauffage pourvue d'au moins un support, de préférence d'au moins un support mobile, d'au moins une rampe disposée au-dessus dudit support comportant une pluralité d'émetteurs infrarouge, et d'au moins un élément électrique chauffant, disposé au-dessous ou à l'intérieur dudit support, lequel dispositif est connecté à une installation électrique en monophasé, et dans lequel procédé :
(a) on chauffe ledit support au moyen dudit au moins un élément électrique chauffant jusqu'à atteindre une température de consigne et on maintient ladite température de consigne ;
(b) on approvisionne un produit alimentaire sur ledit support dans ladite au moins une enceinte de chauffage ;
(c) simultanément, on coupe l'alimentation électrique dudit au moins un élément électrique chauffant et on active l'alimentation de ladite au moins une rampe ;
(d) on décongèle, on réchauffe et/ou on cuit le produit alimentaire approvisionné dans ladite au moins une enceinte de chauffage pendant une période de temps inférieure à 3 minutes, de préférence inférieure à 2 minutes, plus préférentiellement inférieure à 1,5 minutes ;
(e) on sort du dispositif le produit alimentaire décongelé, réchauffé et/ou cuit.

La température de consigne pour chauffer ledit support est comprise entre 220 et 350°C, de préférence entre 280 et 340°C, et plus préférentiellement entre 300 et 320°C.

Dans un mode de réalisation, ledit support est une sole, de préférence en pierre, et encore plus préférentiellement en pierre de lave. L'épaisseur du support est avantageusement comprise entre 10 mm et 20 mm, et de préférence entre 12 mm et 18 mm.

La longueur d'onde des rayonnements émis par les émetteurs est comprise entre 0,8 µm et 4 µm, de préférence 0,8 et 3 µm, et plus préférentiellement entre 1 et 2 µm.

Les émetteurs peuvent être des tubes quartz infrarouge délivrant une puissance comprise entre 500 W et 1000 W par tube, de préférence entre 700 et 800 W. Selon l'invention, les émetteurs sont des tubes quartz infrarouge dits à pas variable. De préférence, la rampe d'émetteurs comprend au moins quatre émetteurs, de préférence au moins cinq émetteurs.

Avantageusement, l'élément électrique chauffant est une résistance électrique blindée délivrant une puissance comprise entre 1500 W et 2500 W, de préférence entre 1800 W et 2200 W, et plus préférentiellement entre 1900 W et 2000 W.

Avantageusement le procédé est conduit de manière à ce que la puissance électrique totale absorbée par le dispositif ne dépasse pas 3,5 kW.

Un autre objet de l'invention concerne l'utilisation du procédé selon l'invention pour la décongélation, le réchauffage et/ou la cuisson d'un produit alimentaire congelé. Ce produit alimentaire congelé peut notamment être sélectionné dans le groupe formé par une pizza, un panini, une quiche, un hot-dog, une tarte, un sandwich.

Avantageusement l'utilisation du procédé selon l'invention ledit dispositif est branché sur un secteur d'une tension nominale comprise entre 200V et 240V en mode monophasé.

### Description des figures

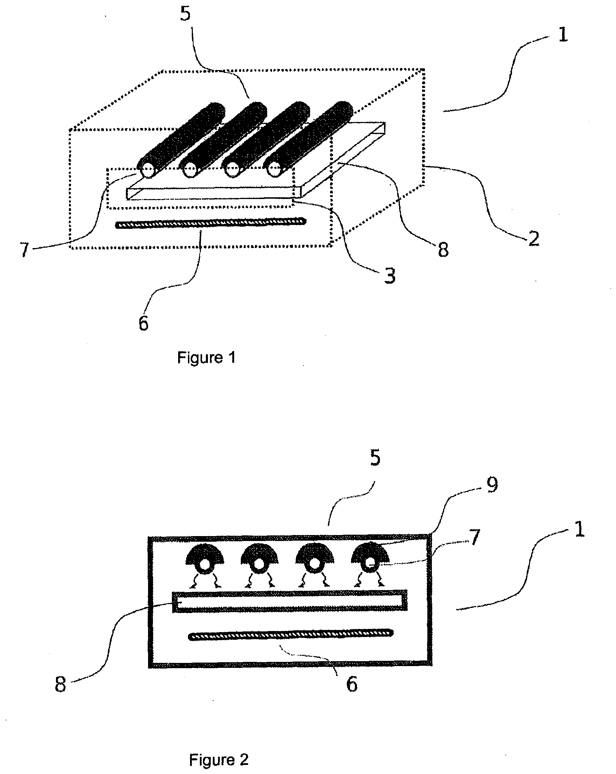

La figure 1 est une vue en perspective d'un mode de réalisation du dispositif utilisé pour la mise en oeuvre du procédé selon l'invention. Le dispositif se présente sous la forme d'une enceinte chauffante **2,** pourvue d'une ouverture **3** de passage d'un support **8.**
La figure 2 est une vue en coupe transversale d'un mode de réalisation du dispositif utilisé pour la mise en oeuvre du procédé selon l'invention. Le dispositif **1** comporte une rampe **5** d'émetteurs infrarouge **7** disposés parallèlement au plan du support **8,** au-dessus de ce dernier. Les émetteurs **7** sont recouverts d'une couche de céramique **9** sur leur partie supérieure. Le dispositif **1** comprend en outre une résistance électrique blindée **6** disposée au-dessous du support **8.**

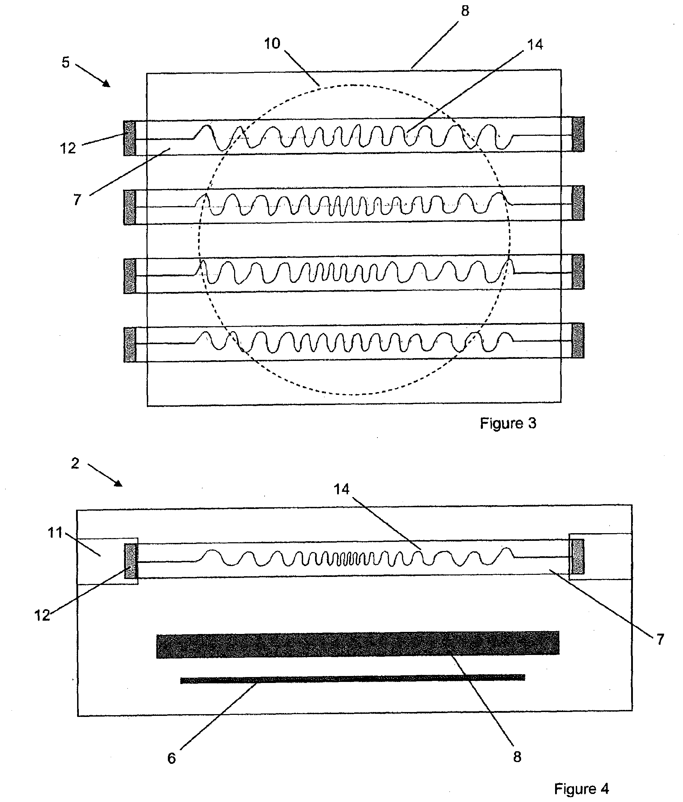

La figure 3 est une vue sur la rampe **5** d'émetteur infrarouge **7** qui présentent un pas de spire variable, plus dense dans la partie centrale **10.** Cette figure est une vue d'en bas (i.e. tournée de 90° autour de l'axe long des tubes) ; la figure 4, en coupe transversale comme la figure 2, montre la position de la rampe **5** dans le four. Les figures 3 et 4 ne montent pas la couche de céramique visible sur les figures 1 et 2.

### Description détaillée de l'invention

Des modes de réalisation préférés du procédé de décongélation, réchauffage et/ou cuisson d'un produit alimentaire seront maintenant décrits en détail en se reportant aux figures. On comprendra que plusieurs modifications peuvent être apportées aux modes de réalisation divulgués ci-après. La description ne doit pas être comprise comme une limitation de l'invention, mais uniquement comme des exemplifications de modes de réalisation préférés.

La présente invention propose un procédé de décongélation, réchauffage et/ou cuisson d'un produit alimentaire, notamment d'une pâte alimentaire surgelée, dans un dispositif **1** comprenant au moins une enceinte de chauffage **2** pourvue d'au moins un support **8,** d'au moins une rampe **5** disposée au-dessus dudit support **8,** comportant une pluralité d'émetteurs infrarouge **7,** et d'au moins un élément électrique chauffant **6** disposée au-dessous dudit support **8,** lequel dispositif est connecté à une installation électrique en monophasé, et dans lequel procédé :
(a) on chauffe ledit support **8** au moyen dudit au moins un élément électrique chauffant **6** jusqu'à atteindre une température de consigne et on maintient ladite température de consigne ;
(b) on approvisionne un produit alimentaire congelé sur ledit support **8** dans ladite au moins une enceinte de chauffage **2** ;
(c) simultanément, on coupe l'alimentation électrique dudit au moins un élément électrique chauffant **6** et on active l'alimentation de ladite au moins une rampe **5** ;
(d) on décongèle, on réchauffe et/ou on cuit le produit alimentaire pendant une période de temps inférieure à 3 minutes, de préférence inférieure à 2 minutes, plus préférentiellement inférieure à 1,5 minutes ;
(e) on sort du dispositif le produit alimentaire décongelé, réchauffé et/ou cuit.

Typiquement, la température de consigne pour chauffer le support **8** est comprise entre 220 et 350°C, de préférence entre 280 et 340°C, et plus préférentiellement entre 300 et 320°C. La température de consigne peut être avantageusement réglable par un thermostat de commande de la température (non représenté sur les figures).

Les émetteurs infrarouge **7** de la rampe **5** sont de préférence des tubes quartz infrarouges. Les tubes quartz infrarouge sont typiquement constitués d'un fil chauffant bobiné **14,** généralement en alliage fer-chrome-aluminium. Avantageusement, la rampe **5** disposée au-dessus du support **8** comprend au moins quatre ou cinq tubes quartz infrarouges selon le type de produit alimentaire à décongeler, à chauffer et/ou à cuire. Ces émetteurs infrarouge **7** comprennent de manière connue une zone de contact électrique **12** qui interagit avec une douille **11** afin d'établir d'alimenter ledit émetteur **7** en courant électrique. La puissance électrique émise par chacun des tubes quartz infrarouge **7** du dispositif est comprise entre 500 et 1000 W, de préférence entre 700 W et 800 W. Avantageusement, la longueur des tubes quartz infrarouge **7** est équivalente à la profondeur du support **8.**

De préférence, ledit au moins un élément électrique chauffant **6** est une résistance électrique blindée **6** disposée au-dessous du support **8.** La puissance électrique émise par la résistance électrique blindée **6** est comprise entre 1500 et 2500 W, de préférence entre 1800 et 2200 W, et plus préférentiellement entre 1900 et 2000 W.

Ainsi, en prenant en compte la rampe **5** d'émetteurs infrarouges et la résistance électrique blindée **6,** le dispositif peut atteindre une puissance électrique maximale théorique comprise entre 4 et 7 kW.

Dans le cadre de la présente invention, la longueur d'onde du rayonnement infrarouge émis par les émetteurs **7** de la rampe **5** est comprise entre 0,8 et 4 µm, de préférence entre 0,8 et 3 µm, et plus préférentiellement entre 1 et 2 µm.

Comme cela est visible sur les figures 1, 2 et 3, les émetteurs **7** de la rampe **5** sont disposés de manière parallèles l'un à l'autre dans un même plan et à une distance déterminée réglable, de manière automatique ou de manière manuelle, cette distance étant fonction de la hauteur des émetteurs **7** au-dessus du support **8** et/ou de la surface supérieure du produit alimentaire, de leur puissance ou de la nature du produit alimentaire pour permettre une cuisson régulière en surface du produit, ou son réchauffage seul et sans effet de cuisson irrégulière, par exemple de lignes de cuisson.

Selon l'invention, les tubes quartz infrarouges sont dits à «pas variable» ; cela est illustré de manière schématique sur les figure 3 et 4. Par « pas variable », on entend au sens de l'invention un émetteur infrarouge **7** de type tube quartz dont la distance relative entre deux spires de la bobine **13** varie afin d'obtenir un profil d'intensité du rayonnement infrarouge. Par conséquent, l'intensité du rayonnement peut être adaptée spatialement en fonction de la géométrie du produit alimentaire. Par exemple, pour des produits alimentaires de forme sensiblement circulaire et à grand diamètre, l'intensité de rayonnement doit être avantageusement plus important au niveau de la partie centrale **10** du produit qu'en sa partie périphérique. Ainsi on utilise avantageusement des émetteurs infrarouge **7** de type tube quartz présentant un pas entre deux spires voisines qui est plus faible au niveau de la partie centrale **10** du tube **7** que dans une zone plus éloignée de la partie centrale (sachant que le fil formant bobine **13** ne présente normalement pas de spires aux deux extrémités du tube). De tels tubes à pas variable se trouvent dans le commerce.

Une des caractéristiques essentielles selon le procédé réside dans la simultanéité de l'activation de l'alimentation électrique de la rampe **5** et de la coupe d'alimentation de la résistance électrique blindée **6** lorsque le produit alimentaire est approvisionné dans l'enceinte de chauffage **2** du dispositif **1.** En effet, la rampe **5** d'émetteurs **7** et la résistance électrique blindée **6** ne doivent pas être en marche en même temps lors de l'étape de décongélation, réchauffage et/ou cuisson du produit alimentaire. Étant donnée la puissance électrique délivrée par les émetteurs **7** et la résistance électrique blindée **6,** l'alimentation simultanée de la rampe **5** et de la résistance électrique blindée **6** entrainera inévitablement une disjonction de l'installation électrique, et de manière systématique lorsque le dispositif **1** est connecté sur une installation en monophasé. En effet, si les la rampe **5** et la résistance électrique blindée **6** sont en fonctionnement, la puissance maximale délivrée par le dispositif peut atteindre une valeur comprise entre 4 et 7 kW. La limite de puissance supportée par une installation électrique en monophasé est généralement comprise entre 3 et 3,5 kW ; par conséquent, et en prenant compte de l'ensemble des appareils électriques supplémentaires normalement en fonctionnement dans un local ou une habitation (frigidaire, chambre froide, moyens d'éclairage, chauffage électrique...), la puissance électrique totale consommée dépassera largement la limite fixée pour ce type d'installation. Ainsi, lors de la mise en oeuvre du procédé selon l'invention, la puissance électrique totale absorbée par le dispositif ne doit pas dépasser 3,5 kW. Le fait d'utiliser un four connecté à une installation électrique en monophasée est une caractéristique technique essentielle du procédé selon l'invention, car cela permet son utilisation dans des locaux ou une installation triphasée n'est pas disponible. Ainsi le procédé selon l'invention peut être mis en oeuvre dans des locaux mobiles de type camionnette à pizza ou caravane, dans des locaux temporaires (cabane installée sur une plage, au bord d'une piste de ski ou sur une place publique lors d'un évènement) ou dans tout autre local ne disposant pas d'une installation triphasée (salle réfectoire) ou dont l'installation triphasée existante ne permet pas une connexion supplémentaire.

De plus, quand bien même une installation électrique en triphasé pourrait supporter le fonctionnement simultanée des émetteurs **7** de la rampe **5** et de la résistance électrique blindée **6,** elle n'est pas envisagée dans le procédé selon l'invention ; les installations électriques en triphasé présentent de nombreux inconvénients, notamment en terme du coût de consommation, d'abonnement et de construction, et ne sont utilisées que dans certains secteurs industriels nécessitant de fortes puissances électriques. Enfin, les installations électriques en triphasé doivent répondre à de nombreuses normes de sécurité électrique, et conduisent très souvent à une mise en conformité électrique qui est couteuse.

Avantageusement, la surface inférieure des émetteurs infrarouges **7** est recouverte par une couche de céramique **9** ; cela est illustré sur les figures 1 et 2. Préférentiellement, toute la surface supérieure desdits émetteurs est recouverte par une couche de céramique **9.** Dans le cadre de la présente invention, on entend par "surface supérieure desdits émetteurs" la portion de la surface de l'émetteur située au-dessus du plan de symétrie, dudit émetteur **7,** parallèle au support **8.**

Il est à noter que la couche de céramique **9** peut également recouvrir une portion plus grande desdits émetteurs **7** pour autant que cela n'empêche pas l'émission du rayonnement vers le support **8.** Ainsi, le support **8** peut être chauffé et refroidie rapidement, ce qui augmente le rendement énergétique et la rapidité d'utilisation du dispositif **1.** La couche céramique **9** permet une meilleure réflexion des ondes vers le support **8** et une augmentation importante de la déperdition énergétique vers le haut du dispositif.

Ladite couche de céramique **9** peut être d'épaisseur variable. Elle peut notamment varier d'un émetteur à l'autre, ou d'un point à l'autre de la surface d'un même émetteur. Selon un mode réalisation préféré de l'invention, l'épaisseur de ladite couche de céramique **9** est comprise entre 1 et 5 mm, de préférence entre 2 et 3 mm.

Selon un mode de réalisation préféré de l'invention, le support **8** est une sole, de préférence une sole en pierre de lave, par exemple une pierre de lave de faible densité (i.e. poreuse). Une telle pierre absorbe et restitue très rapidement la chaleur. Toute autre pierre peut convenir, de même une plaque en métal (aluminium ou acier), même si l'inertie thermique d'une plaque métallique serait plus grande.

Ledit support **8** est avantageusement monté sur un tiroir mobile relativement à une ouverture adéquate de l'enceinte du dispositif, ce tiroir étant apte à être sorti pour la dépose du produit sur le support et à être amené à l'intérieur de l'enceinte et, de même pour son retrait à la fin de la cuisson avec éventuellement, une extraction à sortie automatique en fin de cuisson. L'épaisseur du support est comprise entre 10 et 20 mm, de préférence entre 12 et 18 mm, et plus préférentiellement autour de 15 mm.

La rampe **5** d'émetteurs **7** est avantageusement disposée de façon parallèle à la surface du support **8,** à faible distance de celui-ci, de l'ordre de 30 à 100 mm, de préférence entre 40 et 70 mm. La résistance électrique blindée **6** est également disposée de façon parallèle à la surface du support **8,** à très faible distance de ce dernier, de l'ordre de 5 à 20 mm.

Dans un mode de réalisation avantageux (non représenté sur les figures), la résistance électrique blindée **6** est directement intégrée dans le support **8** ; à ce titre elle peut être positionnée au-dessous dudit support **8** et fixée sur ledit support **8;** alternativement elle peut être disposée à l'intérieur dudit support **8.**

Avantageusement, l'enceinte chauffante **2** est relativement compacte et donc de faible encombrement. De préférence, la hauteur de l'enceinte **2** est comprise entre 180 et 220 mm, sa largeur est comprise entre 450 et 550 mm, et sa profondeur est comprise entre 350 et 450 mm.

Le support **8** est de préférence un support mobile et est avantageusement monté coulissant, par exemple sur des glissières latérales (non représentées) de l'enceinte **2.** Il coulisse parallèlement au plan de l'enceinte **2.** Grâce à cette disposition, le rayonnement émis par les émetteurs **7** de la rampe **5** est concentré sur le produit alimentaire. Simultanément à l'effet de rayonnement supérieur qui permet d'obtenir un effet croustillant, la pâte est cuite au niveau inférieur au contact du support **8,** lequel a été chauffé préalablement à une température cible par la résistance électrique blindée **6.**

Selon un mode de réalisation particulier de l'invention, ladite enceinte **2** pourra comprendre une façade amovible. Ladite façade amovible permet un accès facile à l'intérieur du four **1** pour effectuer les opérations de nettoyage et d'entretien. Selon un mode de réalisation préféré, ladite façade amovible est associée, au niveau de sa face interne à deux moyens de protection, placés perpendiculairement à ladite face interne, de telle sorte qu'une fois la façade amovible en place sur l'enceinte **2** lesdits moyens de protection sont placés de part et d'autre du support **8** et de telle sorte que tout ou partie desdits moyens de protection est placé à un niveau supérieur à celui dudit support **8**.

Selon un mode de réalisation encore plus préféré, lesdits moyens de protection comprennent des lames dont le plan est sensiblement perpendiculaire à celui du support **8.** Les moyens de protection font écran entre le support **8** et la face interne des parois latérales de l'enceinte **2** et permettent de protéger lesdites faces internes des projections émises lors de la cuisson. De plus, l'entretien du four est plus aisé car les moyens de protection peuvent être retirés de l'enceinte **1** avec la paroi amovible et peuvent être lavés aisément.

Ce qui précède montre l'intérêt du dispositif selon l'invention pour la décongélation, le réchauffage et la cuisson rapide d'un produit alimentaire, notamment en vue d'une commercialisation rapide, notamment depuis une forme surgelée. On peut également envisager l'utilisation d'un four selon l'invention pour une utilisation domestique.

Le procédé selon l'invention permet de décongeler, réchauffer et/ou cuire un produit alimentaire congelé en un temps très court, grâce à une forte puissance de chauffage, mais tout en étant réalisé sur une installation électrique en monophasé, et donc réalisable dans la grande majorité des locaux utilisés à des fins de restauration, et réalisable également dans la majorité des habitations. Par conséquent, le risque de disjonction, le coût de la consommation électrique et d'abonnement sont réduits.

De plus, l'inertie thermique de la sole est considérablement diminuée par la présence d'une résistance électrique chauffante à forte puissante située en-dessous et à proximité immédiate de la sole. En effet, pendant le temps de décongélation, chauffage et/ou cuisson du produit alimentaire, i.e. pendant un temps compris entre 1 et 3 minutes, la température de la sole baisse d'environ 15°C. Cette diminution de la température est rapidement récupérée lors de la remise en marche de la résistance électrique blindée à forte puissance électrique. Typiquement, la température de consigne est de nouveau atteinte en 30 secondes. Ainsi, le procédé selon l'invention permet de décongeler, réchauffer et/ou cuire de nombreux produits alimentaires les uns après les autres en un temps très court et de manière très satisfaisante.

Cette faible inertie thermique de la sole, en particulier lorsqu'elle est constituée par une pierre de lave ou lorsqu'elle comprend une pierre de lave, convient aussi pour l'utilisation intermittente du procédé selon l'invention : ainsi même à la première mise en route, ou après un temps de non utilisation significatif ayant permis le refroidissement naturel du four, l'élément électrique chauffant **6** disposé au-dessous du support **8** atteint rapidement sa température de consigne, évitant ainsi une attente prolongé du client qui attend le produit alimentaire qu'il a commandé à une période où le four n'était pas encore chaud. Cette possibilité d'utilisation intermittente aisée est un autre avantage du procédé selon l'invention. Les fours calorifuges traditionnels ne la permettent pas car leur inertie thermique est trop grande.

Bien entendu, des variantes de réalisation de l'invention peuvent être apportées. En particulier, l'invention n'est pas limitée aux produits alimentaires de type pâtes alimentaires pour pizza mais convient également à des pâtes alimentaires pouvant se rigidifier à la cuisson (par exemple pour la confection de tartes), ou même de pâte alimentaire pour la confection de tapas. Les pâtes alimentaires sont avantageusement de forme générale plane et d'épaisseur de celle d'une tarte, d'épaisseur peu importante (0,5 à 30 mm environ) de manière à permettre un temps de cuisson rapide dans l'épaisseur de la pâte et les produits alimentaires de type pizza, paninis, quiches, hot-dogs consommés sous forme chaude conviennent.

## Revendications

1. Procédé de décongélation, réchauffage et/ou cuisson d'un produit alimentaire, notamment d'une pâte alimentaire surgelée, dans un dispositif (1) comprenant au moins une enceinte de chauffage (2) pourvue d'au moins un support (8), d'au moins une rampe (5) disposée au-dessus dudit support (8) comportant une pluralité d'émetteurs infrarouge (7), lesdits émetteurs (7) de ladite au moins une rampe (5) étant des tubes quartz infrarouge dits à pas variable, et d'au moins un élément électrique chauffant (6), disposé au-dessous ou à l'intérieur dudit support (8), lequel dispositif est connecté à une installation électrique en monophasé, et dans lequel procédé :
(a) on chauffe ledit support (8) au moyen dudit au moins un élément électrique chauffant (6) jusqu'à atteindre une température de consigne et on maintient ladite température de consigne ;
(b) on approvisionne un produit alimentaire sur ledit support (8) dans ladite au moins une enceinte de chauffage (2) ;
(c) simultanément, on coupe l'alimentation électrique dudit au moins un élément électrique chauffant (6) et on active l'alimentation de ladite au moins une rampe (5) ;
(d) on décongèle, on réchauffe et/ou on cuit le produit alimentaire approvisionné dans ladite au moins une enceinte de chauffage (2) pendant une période de temps inférieure à 3 minutes, de préférence inférieure à 2 minutes, plus préférentiellement inférieure à 1,5 minutes ;
(e) on sort du dispositif le produit alimentaire décongelé, réchauffé et/ou cuit.

2. Procédé selon la revendication 1, **caractérisé en ce que** la température de consigne pour chauffer ledit support (8) est comprise entre 220 et 350°C, de préférence entre 280 et 340°C, et plus préférentiellement entre 300 et 320°C.

3. Procédé selon la revendication 1 ou 2, **caractérisé en ce que** ledit support (8) est une sole, de préférence en pierre, et encore plus préférentiellement en pierre de lave.

4. Procédé selon la revendication 3, **caractérisé en ce que** l'épaisseur du support est comprise entre 10 mm et 20 mm, et de préférence entre 12 mm et 18 mm.

5. Procédé selon l'une quelconque des revendication 1 à 4, **caractérisé en ce que** la longueur d'onde des rayonnements émis par les émetteurs (7) est comprise entre 0,8 µm et 4 µm, de préférence 0,8 et 3 µm, et plus préférentiellement entre 1 et 2 µm.

6. Procédé selon l'une quelconque des revendications 1 à 5, **caractérisé en ce que** les émetteurs (7) sont des tubes quartz infrarouge délivrant une puissance comprise entre 500 W et 1000 W par tube, de préférence entre 700 et 800 W.

7. Procédé selon l'une quelconque des revendications 1 à 6, **caractérisé en ce que** ladite rampe (5) comprend au moins quatre émetteurs (7), de préférence au moins cinq émetteurs (7).

8. Procédé selon l'une quelconque des revendications 1 à 7, **caractérisé en ce que** l'élément électrique chauffant (6) est une résistance électrique blindée délivrant une puissance comprise entre 1500 W et 2500 W, de préférence entre 1800 W et 2200 W, et plus préférentiellement entre 1900 W et 2000 W.

9. Procédé selon l'une quelconque des revendications 1 à 8, **caractérisé en ce qu'**au cours de l'étape (d), la puissance électrique totale absorbée par le dispositif ne dépasse pas 3,5 kW.

10. Procédé selon l'une quelconque des revendications 1 à 9, **caractérisé en ce que** ladite au moins une rampe (5) d'émetteurs infrarouge (7) est positionnée à une distance comprise entre 30 et 100 mm, de préférence entre 40 et 70 mm, par rapport au support (8).

11. Procédé selon l'une quelconque des revendications 1 à 10, **caractérisé en ce que** ledit dispositif (1) est branché sur un secteur d'une tension nominale comprise entre 200V et 240V en mode monophasé.

12. Utilisation du procédé selon l'une quelconque des revendications 1 à 11 pour la décongélation, le réchauffage et/ou la cuisson d'un produit alimentaire congelé.

13. Utilisation selon la revendication 12, dans laquelle ledit produit alimentaire congelé est sélectionné dans le groupe formé par une pizza, un panini, une quiche, un hot-dog, une tarte, un sandwich.

14. Utilisation selon la revendication 12 ou 13, dans laquelle ledit dispositif (1) est branché sur un secteur d'une tension nominale comprise entre 200V et 240V en mode monophasé.

## Patentansprüche

1. Verfahren zum Auftauen, Erhitzen und/oder Garen eines Nahrungsmittelprodukts, insbesondere eines gefrorenen Nahrungsmittelteigs, in einer Vorrichtung (1), die mindestens einen Heizeinschluss (2) umfasst, der mit mindestens einem Träger (8), mindestens einer Rampe (5), die über dem Träger (8) angeordnet ist, die eine Vielzahl von Infrarotsendern (7) umfasst, wobei die Sender (7) der mindestens einen Rampe (5) sogenannte Infrarotquarzröhren mit variablem Abstand sind, und mindestens einem elektrischen Heizelement (6) versehen ist, das unter dem oder in dem Inneren des Trägers (8) angeordnet ist, wobei die Vorrichtung mit einer einphasigen elektrischen Anlage verbunden ist, und bei welchem Verfahren:
(a) der Träger (8) mittels des mindestens einen elektrischen Heizelements (6) erhitzt wird, bis er eine Solltemperatur erreicht und auf dieser Solltemperatur gehalten wird;
(b) ein Nahrungsmittelprodukt auf dem Träger (8) in den mindestens einen Heizeinschluss (2) zugeführt wird;
(c) gleichzeitig die Stromversorgung des mindestens einen elektrischen Heizelements (6) unterbrochen und die Versorgung der mindestens einen Rampe (5) aktiviert wird;
(d) das in den mindestens einen Heizeinschluss (2) zugeführte Nahrungsmittelprodukt während einer Zeitspanne kleiner als 3 Minuten, bevorzugt kleiner als 2 Minuten, bevorzugter kleiner als 1,5 Minuten aufgetaut, erhitzt und/oder gegart wird;
(e) das aufgetaute, erhitzte und/oder gegarte Nahrungsmittelprodukt aus der Vorrichtung herausgenommen wird.

2. Verfahren nach Anspruch 1, **dadurch gekennzeichnet, dass** die Solltemperatur zum Erhitzen des Trägers (8) zwischen 220 und 350 °C, bevorzugt zwischen 280 und 340 °C und bevorzugter zwischen 300 und 320 °C liegt.

3. Verfahren nach Anspruch 1 oder 2, **dadurch gekennzeichnet, dass** der Träger (8) ein Herd, bevorzugt aus Stein und noch bevorzugter aus Lavagestein ist.

4. Verfahren nach Anspruch 3, **dadurch gekennzeichnet, dass** die Stärke des Trägers zwischen 10 mm und 20 mm und bevorzugt zwischen 12 mm und 18 mm liegt.

5. Verfahren nach einem der Ansprüche 1 bis 4, **dadurch gekennzeichnet, dass** die Wellenlänge der Strahlungen, die von den Sendern (7) abgegeben werden, zwischen 0,8 µm und 4 µm, bevorzugt zwischen 0,8 µm und 3 µm und bevorzugter zwischen 1 und 2 µm liegt.

6. Verfahren nach einem der Ansprüche 1 bis 5, **dadurch gekennzeichnet, dass** die Sender (7) Infrarotquarzröhren sind, die eine Leistung liefern, die zwischen 500 W und 1000 W pro Röhre, bevorzugt zwischen 700 und 800 W liegt.

7. Verfahren nach einem der Ansprüche 1 bis 6, **dadurch gekennzeichnet, dass** die Rampe (5) mindestens vier Sender (7), bevorzugt mindestens fünf Sender (7) umfasst.

8. Verfahren nach einem der Ansprüche 1 bis 7, **dadurch gekennzeichnet, dass** das elektrische Heizelement (6) ein geschirmter elektrischer Widerstand ist, der eine Leistung liefert, die zwischen 1500 W und 2500 W, bevorzugt zwischen 1800 W und 2000 W und bevorzugter zwischen 1900 W und 2000 W liegt.

9. Verfahren nach einem der Ansprüche 1 bis 8, **dadurch gekennzeichnet, dass** im Laufe des Schritts (d) die elektrische Gesamtleistung, die von der Vorrichtung aufgenommen wird, 3,5 kW nicht überschreitet.

10. Verfahren nach einem der Ansprüche 1 bis 9, **dadurch gekennzeichnet, dass** die mindestens eine Rampe (5) von Infrarotsendern (7) in einem Abstand von dem Träger (8) positioniert ist, der zwischen 30 und 100 mm, bevorzugt zwischen 40 und 70 mm liegt.

11. Verfahren nach einem der Ansprüche 1 bis 10, **dadurch gekennzeichnet, dass** die Vorrichtung (1) an einen Netzstrom mit einer Nennspannung angeschlossen ist, die im einphasigen Modus zwischen 200 V und 240 V liegt.

12. Verwendung des Verfahrens nach einem der Ansprüche 1 bis 11 zum Auftauen, Erhitzen und/oder Garen eines gefrorenen Nahrungsmittelprodukts.

13. Verwendung nach Anspruch 12, wobei das gefrorene Nahrungsmittelprodukt aus der Gruppe ausgewählt ist, die aus einer Pizza, einem Panini, einer Quiche, einem Hotdog einem Kuchen, einem Sandwich gebildet ist.

14. Verwendung nach Anspruch 12 oder 13, wobei die Vorrichtung (1) an einen Netzstrom mit einer Nennspannung angeschlossen ist, die im einphasigen Modus zwischen 200 V und 240 V liegt.

## Claims

1. Method for defrosting, reheating and/or cooking a food product, in particular a frozen dough, in a device (1) comprising at least one heating enclosure (2) provided with at least one support (8), at least one ramp (5) arranged above said support (8) comprising a plurality of infrared transmitters (7), said transmitters (7) of said at least one ramp (5) being infrared quartz tubes called variable-pitch, and at least one electrical heating element (6), arranged below or inside said support (8), which device is connected to a single-phase, electrical installation, and in which method:
(a) said support (8) is heated by means of said at least one electrical heating element (6) up to reaching a setpoint temperature and said setpoint temperature is maintained;
(b) a food product is supplied on said support (8) in said at least one heating enclosure (2);
(c) simultaneously, the power is cut from said at least one electrical heating element (6) and the power of said at least one ramp (5) is activated;
(d) the food product supplied in said at least one heating enclosure (2) is defrosted, reheated or cooked for a period of time less than 3 minutes, preferably less than 2 minutes, more preferably, less than 1.5 minutes;
(e) the defrosted, reheated and/or cooked food product is removed from the device.

2. Method according to claim 1, **characterised in that** the setpoint temperature to heat said support (8) is between 220 and 350°C, preferably between 280 and 340°C, and more preferably between 300 and 320°C.

3. Method according to claim 1 or 2, **characterised in that** said support (8) is a sole, preferably made of stone, and even more preferably, lava stone.

4. Method according to claim 3, **characterised in that** the thickness of the support is between 10mm and 20mm, and preferably between 12mm and 18mm.

5. Method according to any one of claims 1 to 4, **characterised in that** the wavelength of the beams emitted by the transmitters (7) is between 0.8µm and 4µm, preferably 0.8µm and 3µm, and more preferably between 1µm and 2µm.

6. Method according to any one of claims 1 to 5, **characterised in that** the transmitters (7) are infrared quartz tubes delivering a power of between 500W and 1000W per tube, preferably between 700W and 800W.

7. Method according to any one of claims 1 to 6, **characterised in that** said ramp (5) comprises at least four transmitters (7), preferably at least five transmitters (7).

8. Method according to any one of claims 1 to 7, **characterised in that** the electrical heating element (6) is a shielded electrical resistance delivering a power of between 1500W and 2500W, preferably between 1800W and 2200W, and more preferably between 1900W and 2000W.

9. Method according to any one of claims 1 to 8, **characterised in that** during step (d), the total electrical power absorbed by the device does not exceed 3.5kW.

10. Method according to any one of claims 1 to 9, **characterised in that** said at least one ramp (5) of infrared transmitters (7) is positioned at a distance of between 30mm and 100mm, preferably between 40mm and 70mm, with respect to the support (8).

11. Method according to any one of claims 1 to 10, **characterised in that** said device (1) is connected to a sector of a nominal voltage of between 200V and 240V in single-phase mode.

12. Use of the method according to any one of claims 1 to 11 for the defrosting, the reheating and/or the cooking of a frozen food product.

13. Use according to claim 12, wherein said frozen food product is selected from the group formed by a pizza, a panini, a quiche, a hot dog, a pie, or a sandwich.

14. Use according to claim 12 or 13, wherein said device (1) is connected to a sector of a nominal voltage of between 200V and 240V in single-phase mode.
